(19) Europäisches Patentamt

European Patent Office

Office européen des brevets

(11) **EP 3 382 728 A1**

(12) **EUROPEAN PATENT APPLICATION**
published in accordance with Art. 153(4) EPC

(43) Date of publication:
03.10.2018 Bulletin 2018/40

(21) Application number: 16868500.6

(22) Date of filing: 21.11.2016

(51) Int Cl.:
*H01G 11/36* [(2013.01)]  *H01G 11/24* [(2013.01)]
*H01G 11/30* [(2013.01)]

(86) International application number:
**PCT/JP2016/084433**

(87) International publication number:
**WO 2017/090553 (01.06.2017 Gazette 2017/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: 27.11.2015 JP 2015231657
18.02.2016 JP 2016028871

(71) Applicant: Sekisui Chemical Co., Ltd.
Osaka-shi, Osaka 530-8565 (JP)

(72) Inventors:
• **OHARA, Shunji**
**Mishima-gun**
**Osaka 618-0021 (JP)**
• **SASAGAWA, Naoki**
**Mishima-gun**
**Osaka 618-0021 (JP)**
• **FUJIWARA, Akihiko**
**Mishima-gun**
**Osaka 618-0021 (JP)**

(74) Representative: **Ter Meer Steinmeister & Partner**
**Patentanwälte mbB**
**Nymphenburger Straße 4**
**80335 München (DE)**

(54) **CAPACITOR ELECTRODE MATERIAL AND CAPACITOR**

(57) A capacitor electrode material that is capable of effectively increasing the capacitance of a capacitor is provided. A capacitor electrode material, comprising a composite of a carbon material having a graphene layered structure and fine particles, wherein the specific surface area of the composite measured by methylene blue adsorption method is 1100 $m^2$/g or more.

EP 3 382 728 A1

**Description**

Technical Field

The present invention relates to a capacitor electrode material and a capacitor including the capacitor electrode material.

Background Art

Carbon materials such as graphite, activated carbon, carbon nanofibers, or carbon nanotubes have been widely used as a capacitor electrode material from environmental aspects until now.

For example, the following Patent Literature 1 discloses a capacitor electrode material comprising resin-remaining partially exfoliated graphite produced by the pyrolysis of a resin in a composition in which the resin is fixed to graphite or primary exfoliated graphite by grafting or adsorption, having a structure in which graphite is partially exfoliated, and having the resin remaining partially; and a binder resin.

Citation List

Patent Literature

Patent Literature 1

International Publication No. WO 2015/98758

Summary of Invention

Technical Problem

In Patent Literature 1, an increase in the capacitance of a capacitor is attempted by using the above-mentioned resin-remaining partially exfoliated graphite for a capacitor electrode material. However, when the capacitor electrode material in Patent Literature 1 is used, the capacitance of the capacitor has not been enough yet.

An object of the present invention is to provide a capacitor electrode material that is capable of effectively increasing the capacitance of a capacitor and a capacitor including the capacitor electrode material.

Solution to Problem

A capacitor electrode material according to the present invention comprising a composite of a carbon material having a graphene layered structure and fine particles, and the specific surface area of the composite measured by methylene blue adsorption method is 1100 $m^2/g$ or more.

In a specific aspect of a capacitor electrode material according to the present invention, the specific surface area of the composite measured by methylene blue adsorption method is 3500 $m^2/g$ or less.

In another specific aspect of a capacitor electrode material according to the present invention, the fine particles exist between graphene layers of the carbon material.

In yet another specific aspect of a capacitor electrode material according to the present invention, the carbon material is graphite or exfoliated graphite.

In still another specific aspect of a capacitor electrode material according to the present invention, the specific surface area of the carbon material measured by methylene blue adsorption method is 300 $m^2/g$ or more and 2500 $m^2/g$ or less.

In still another specific aspect of a capacitor electrode material according to the present invention, the specific surface area of the composite measured by methylene blue adsorption method is 1500 $m^2/g$ or more.

In still another specific aspect of a capacitor electrode material according to the present invention, the specific surface area of the composite measured by methylene blue adsorption method is 1800 $m^2/g$ or more.

In still another specific aspect of a capacitor electrode material according to the present invention, the carbon material is partially exfoliated graphite having a structure in which graphite is partially exfoliated.

In still another specific aspect of a capacitor electrode material according to the present invention, the fine particles are at least one selected from the group consisting of activated carbon, carbon black and graphene oxide.

In still another specific aspect of a capacitor electrode material according to the present invention, the specific surface area of the fine particles measured by methylene blue adsorption method is 500 $m^2/g$ or more and 4000 $m^2/g$

or less.

In still another specific aspect of a capacitor electrode material according to the present invention, the median size of the fine particles is 10 nm or more and less than 20 μm.

In still another specific aspect of a capacitor electrode material according to the present invention, a weight ratio between the fine particles and the carbon material is 1/20 or more and 4 or less.

In still another specific aspect of a capacitor electrode material according to the present invention, a capacitor electrode material further contains a binder resin. Preferably, the binder resin is a styrene butadiene rubber, a polybutyral, a polytetrafluoroethylene, a polyimide resin, an acrylic resin, or a fluoropolymer. Preferably, the fluoropolymer is polyvinylidene fluoride.

In still another specific aspect of a capacitor electrode material according to the present invention, the content of the binder resin is 0.3 parts by weight or more and 40 parts by weight or less on the basis of 100 parts by weight of the composite.

A capacitor according to the present invention is provided with a capacitor electrode material composed according to the present invention.

Advantageous Effects of Invention

Since a capacitor electrode material according to the present invention comprises a composite of a carbon material having a graphene layered structure and fine particles and the specific surface area of the composite measured by methylene blue adsorption method is 1100 m$^2$/g or more, the capacitance of the capacitor can be increased effectively.

Brief Description of Drawing

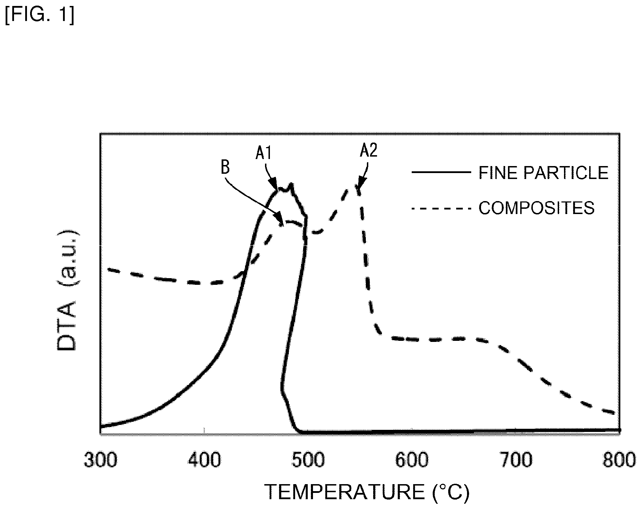

[Figure 1] Figure 1 is a figure illustrating the DTA curves of a composite and fine particles.

Description of Embodiments

The details of the present invention will be described hereinafter.

[Capacitor Electrode Material]

A capacitor electrode material according to the present invention comprises a composite of a carbon material having a graphene layered structure and fine particles. The specific surface area of the composite measured by methylene blue adsorption method is 1100 m$^2$/g or more.

Since a capacitor electrode material of the present invention comprises a composite of the carbon material and particles, the capacitor electrode material has excellent conductivity. Since a specific surface area of the above-mentioned composite of the capacitor electrode material according to the present invention measured by methylene blue adsorption method is 1100 m$^2$/g or more, the capacitance of the capacitor can be increased effectively. When the specific surface area becomes closer to the above range with the above-mentioned carbon material alone, influence such as the carbon material's going out of a proper structure due to restacking and scrolling; an increase in area incapable of contributing to the adsorption and desorption of ions due to the finer pore size; or the deterioration of the film formability may be observed.

At least a portion of fine particles preferably exists between graphene layers of the carbon material in the above-mentioned composite in the present invention. Especially when the carbon material is the below-mentioned partially exfoliated graphite, the fine particles are preferably inserted between layers of exfoliated graphenes or graphene layered products in the carbon material. The fine particles may be inserted between layers of exfoliated graphenes and graphene layered products.

Meanwhile, at least a portion of fine particles preferably exists on the surface of the carbon material. However, the fine particles may exist both between graphene layers of the carbon material and on the surface of the carbon material.

When fine particles exist between graphene layers of the carbon material, the specific surface area of the composite can be increased further. When the fine particles exist on the surface of the carbon material, the aggregation of a carbon material particle with another can be suppressed more efficiently.

The shape of the capacitor electrode material according to the present invention is not limited in particular, but the capacitor electrode can be used in a proper form such as film form, sheet form or granular form.

The details of materials constituting the capacitor electrode material of the present invention and a method for producing the same will be described hereinafter.

(Composite)

A capacitor electrode material according to the present invention comprises a composite of a carbon material having a graphene layered structure and fine particles. The specific surface area of the above-mentioned composite measured by methylene blue adsorption method is 1100 $m^2$/g or more.

When the specific surface area of the above-mentioned composite measured by methylene blue adsorption method is too small, the capacitance of a capacitor may not be increased enough. The specific surface area measured by methylene blue adsorption method is preferably 3500 $m^2$/g or less. When the specific surface area of the above-mentioned composite measured by methylene blue adsorption method is too large, a coating liquid produced by using the above-mentioned composite may have a low dispersibility or a low handleability.

The specific surface area of the above-mentioned composite measured by methylene blue adsorption method is more preferably 1500 $m^2$/g or more, still more preferably 1800 $m^2$/g or more, and preferably 3300 $m^2$/g or less in view of increasing the capacitance of a capacitor still more effectively.

The specific surface area by the above-mentioned methylene blue adsorption method can be measured by the following method.

First, the methylene blue adsorption amount of a measurement sample is determined. The methylene blue adsorption amount is measured on the basis of a difference between the absorbance of a solution of methylene blue in methanol at a concentration of 10 mg/L and that of a supernatant liquid obtained by adding a measurement sample to the solution of methylene blue in methanol and stirring the mixture and thereafter centrifuging the mixture.

The methylene blue adsorption amount can be determined more specifically by the following method. The measurement sample is added to the solution of methylene blue in methanol at a concentration of 10 mg/L, and the mixture is stirred and next centrifuged to obtain a supernatant liquid. An absorbance change at the maximum absorption wavelength of the obtained supernatant liquid is observed. Methylene blue is adsorbed to the measurement sample by $\pi$-conjugation. Meanwhile, methylene blue emits fluorescence by light irradiation. When methylene blue is adsorbed to the measurement sample, the methylene blue stops emitting fluorescence. Namely, the fluorescence intensity would decrease. Therefore, the methylene blue adsorption amount can be determined from a decrease in fluorescence intensity obtained by subtracting the fluorescence intensity of the above-mentioned supernatant liquid from that of the original methylene blue.

Next, the specific surface area is calculated from the methylene blue adsorption amount obtained as described above. There is a correlation between the above-mentioned methylene blue adsorption amount and the specific surface area of a carbon material. When the specific surface area ($m^2$/g) determined by BET is defined as x and the above-mentioned methylene blue adsorption amount ($\mu$mol/g) is defined as y in conventionally known spherical graphite particles (KETJENBLACK EC300JD produced by Lion Specialty Chemicals Co., Ltd. or RPSA-2 produced by the Association of Powder Process Industry and Engineering, JAPAN), x and y satisfy a relationship of y $\approx$ 0.13x. This indicates that the methylene blue adsorption amount increases as the specific surface area become larger. The wet surface area was calculated from the methylene blue adsorption amount by assuming that the specific surface areas obtained by measuring the graphite particles by methylene blue adsorption method and by the BET method were equivalent. As a result, the relational expression between the methylene blue adsorption amount and the wet surface area by methylene blue adsorption method is defined: the specific surface area by methylene blue adsorption method ($m^2$/g) = the adsorption amount by the above-mentioned measurement ($\mu$mol/g)/0.13. The coefficient of the above-mentioned relational expression is a correlation coefficient when it is assumed that there is substantially no difference between the specific surface areas by the dry method and by the wet method as mentioned above.

Carbon Material Having Graphene Layered Structure

The above-mentioned composite contains a carbon material having a graphene layered structure.

A carbon material having a graphene layered structure is not limited in particular, but is preferably graphite or exfoliated graphite. The carbon material is more preferably partially exfoliated graphite having a structure in which graphite is partially exfoliated. Fine particles can be inserted still more effectively between layers since graphite is partially exfoliated.

Graphite is a layered product of a plurality of graphene sheets. The number of layers of the graphene sheets in graphite is 100,000 or more to around 1,000,000. Natural graphite, synthetic graphite, expanded graphite and the like can be used as graphite. The distance between graphene layers of expanded graphite is longer than that of common graphite. Therefore, it is preferred to use expanded graphite as graphite.

Exfoliated graphite is obtained by performing the exfoliation treatment of original graphite, and means a graphene sheet-layered product thinner than the original graphite. As long as exfoliated graphite has fewer layers of graphene sheets than the original graphite, the number of layers may be any number.

The number of layers of graphene sheets is preferably 1,000 or less, and more preferably 500 or less in exfoliated graphite.

Partially exfoliated graphite contains graphite or primary exfoliated graphite and a resin, and is obtained by providing a composition in which the resin is fixed to graphite or primary exfoliated graphite by grafting or adsorption and pyrolyzing the resin contained in the composition. Partially exfoliated graphite has a structure in which graphite is partially exfoliated. Such partially exfoliated graphite can be produced in a method similar to the method for producing exfoliated graphite-resin composite material, for example, described in International Publication No. WO 2014/34156. Since graphite is exfoliated more easily, it is preferred to use expanded graphite as the above-mentioned graphite.

However, the resin contained in the above-mentioned composition may be removed thoroughly, or may be pyrolyzed with the resin partially remaining at the time of the above-mentioned pyrolysis in the present invention. Therefore, the resin may be removed thoroughly or may partially remain in partially exfoliated graphite. The partially exfoliated graphite with the resin remaining is obtained in the above-mentioned method in the present invention, thereafter, the resin may be removed by performing treatment by heating, oxidation, reduction and the like in other steps.

Such a resin is not limited in particular, but is preferably a polymer of a radically polymerizable monomer. The resin may be a copolymer of a plurality of radically polymerizable monomers, or may be a homopolymer of one radically polymerizable monomer.

Examples of resins to use include polyethylene glycol, polypropylene glycol, polyglycidyl methacrylate, polyvinyl acetate, polybutyral, and poly(meth)acrylates. Examples of resins to use preferably include polyethylene glycol, polypropylene glycol, and polyvinyl acetate. When polyethylene glycol, polypropylene glycol or polyvinyl acetate is used, the specific surface area of partially exfoliated graphite can be increased further. The kind of resin can be selected properly in view of the compatibility with a solvent to use.

The amount of a resin remaining in partially exfoliated graphite is preferably 2 to 350 parts by weight, more preferably 15 to 250 parts by weight, and still more preferably 10 to 200 parts by weight on the basis of 100 parts by weight of partially exfoliated graphite. The specific surface area of partially exfoliated graphite can be increased further by keeping a remaining resin in the above-mentioned range.

In partially exfoliated graphite, the distance between graphene layers in graphite or primary exfoliated graphite is increased by pyrolysis of the resin and the graphite is partially exfoliated thereby. In partially exfoliated graphite, the graphite is partially exfoliated from edge to the inside to some extent.

Partially exfoliated graphite has many portions in which graphite is exfoliated. The above-mentioned portions in which graphite is exfoliated means portions in which a portion of graphene layered products or graphenes are partially exfoliated in graphite or primary exfoliated graphite.

Partially exfoliated graphite has a structure in which graphenes are layered in a central portion like original graphite or primary exfoliated graphite. However, portions in which the distance between graphene layers thereof becomes larger than that of original graphite or primary exfoliated graphite by the pyrolysis of a resin may exist also in a central portion.

In partially exfoliated graphite, an area ratio between edge portions in which the graphite is partially exfoliated and an unexfoliated central portion is preferably 1:1 to 1:60. Edge portions may be in any shape on the left and the right in this case. The partially exfoliated graphite can have combination of still larger specific surface area and still higher conductivity by keeping the ratio between edge portions and a central portion in the above-mentioned range.

At edge portions, the numbers of layers of graphenes at portions in which graphite is partially exfoliated are few. The numbers of layers of graphenes at portions in which graphite is partially exfoliated are preferably 1000 or less, more preferably 300 or less, and still more preferably 100 or less. When the numbers of layers of graphenes at exfoliated portions are the above-mentioned maximum number or less, compatibility with the below-mentioned binder resin can be improved further.

Since the distance between graphene layers is increased in partially exfoliated graphite and the numbers of graphene layers at exfoliated portions at edge portions are few, the specific surface area is large.

The specific surface area of a carbon material having such a graphene layered structure measured by methylene blue adsorption method is preferably 300 $m^2/g$ or more, and preferably 2500 $m^2/g$ or less.

When the specific surface area of a carbon material measured by methylene blue adsorption method is too small, the capacitance of a capacitor may be incapable of being increased enough. When the specific surface area of a carbon material measured by methylene blue adsorption method is too large, an optimal structure may be incapable of being maintained since restacking and scrolling occur.

The specific surface area of a carbon material measured by methylene blue adsorption method is more preferably 450 $m^2/g$ or more in view of increasing the capacitance of a capacitor further.

The median size of a carbon material having a graphene layered structure is preferably 1 μm or more and 100 μm or less. When the median size of a carbon material is too small, fine particles may not be arranged inside effectively. When the median size of a carbon material is too large, the specific surface area of a composite may not be increased enough.

The median size of a carbon material having a graphene layered structure is more preferably 2 μm or more,

still more preferably 5 $\mu$m or more, more preferably 60 $\mu$m or less, and still more preferably 40 $\mu$m or less in view of increasing the specific surface area of a composite and the capacitance of a capacitor further.

The above-mentioned median size is a size corresponding to a median value in the particle size distribution of a powder. The median size can be calculated by determining the particle size distribution by measuring a sample in which a powder is dispersed in ethanol, for example, with a particle size analyzer in which a laser diffraction and scattering method is used as a principle (LA-950, manufactured by HORIBA, Ltd.).

Fine Particles

The above-mentioned composite contains fine particles. Fine particles are not limited in particular, but are preferably fine particles on which ions can be physically adsorbed and desorbed and/or fine particles having conductivity, namely conductive fine particles. Specifically, activated carbon, carbon black, graphene oxide, graphite, graphite oxide, metal oxides such as titanium oxide, zeolite oxide, or polyacids such as tungstophosphoric acid, or the like can be used. Among these fine particles, one type may be used alone, or two or more types may be used in combination.

The specific surface area of the above-mentioned fine particles measured by methylene blue adsorption method is preferably 500 m$^2$/g or more, and preferably 4000 m$^2$/g or less.

When the specific surface area of fine particles measured by methylene blue adsorption method is too small, the capacitance of a capacitor may not be increased enough. When the specific surface area of fine particles measured by methylene blue adsorption method is too large, the rate of a surface area that is incapable of contributing to an increase in capacitance may increase since pores become too fine.

The specific surface area of fine particles measured by methylene blue adsorption method is more preferably 700 m$^2$/g or more and still more preferably 900 m$^2$/g or more in view of increasing the capacitance of a capacitor further.

The median size of fine particles is preferably 10 nm or more and less than 20 $\mu$m. When the median size of fine particles is too small, fine particles may be incapable of contributing to the maintenance of the structure such as the maintenance of the interlaminar distance of a composite. When the median size of fine particles is too large, fine particles may be incapable of being inserted between layers of a carbon material and the like.

The median size of fine particles is more preferably 20 nm or more, still more preferably 30 nm or more, more preferably 15 $\mu$m or less, and still more preferably 10 $\mu$m or less in view of increasing the specific surface area of a composite and the capacitance of a capacitor further.

The maximum of the particle size distribution of fine particles is desirably 50 $\mu$m or less.

The shape of fine particles may not be limited to spherical form, but may be various shapes such as crushed form, elliptic form, and flake form.

A weight ratio between fine particles and a carbon material having a graphene layered structure is preferably 1/20 or more and 4 or less. When the weight of a carbon material having a graphene layered structure is too heavy, fine particles may not meet the required amount of fine particles inserted between layers of a carbon material. Meanwhile, when the weight of fine particles is too heavy, the rate of fine particles that do not contribute to a composite increases, therefore, effects as the above-mentioned composite may not appear.

When a carbon material is partially exfoliated graphite in the present invention, at least a portion of fine particles preferably exist between graphene layers exfoliated from the carbon material or between graphene layered products. However, at least a portion of fine particles may exist between a graphene exfoliated from the carbon material and a graphene layered product.

In the above-mentioned composite, fine particles preferably exist both between graphene layers exfoliated from the partially exfoliated graphite or between graphene layered products and on the surface of the above-mentioned carbon material. When fine particles are inserted between the graphene layers or graphene layered products of the partially exfoliated graphite, the specific surface area of a composite can be increased further. Since fine particles exist on the carbon material surface, aggregation of a carbon material particle with another can be suppressed more efficiently.

Examples of a method for having fine particles inserted between layers of a carbon material having a graphene layered structure include, but are not limited in particular to, the following method, for example, when partially exfoliated graphite is used for a carbon material.

First, resin-remaining partially exfoliated graphite is produced according to the method for producing exfoliated graphite-resin composite material, described in International Publication No. WO 2014/34156. Next, the obtained partially exfoliated graphite and fine particles are mixed. Mixing methods include a dry method in which both of the powders are kneaded, a semi-dry method in which one of the powders is dispersed in water or an organic solvent, a wet method in which both of the powders are dispersed in water or an organic solvent, and the like. In a carbon material having a graphene layered structure a wet method is preferable since the distance between graphene layers is increased by a solvent used. A remaining resin and the like can be decomposed by processing the obtained composite material further by heating, decomposition by oxidation or reduction, dissolution and the like, and a carbon material with fine particles inserted between layers of a carbon material having a graphene layered structure can be obtained.

At this time, the pyrolysis temperature of fine particles is preferably higher than the pyrolysis temperature of the resin in the resin-remaining partially exfoliated graphite. When heat treatment is performed as a step of removing the resin from a composite, the heat treatment is preferably performed at a heating temperature higher than the pyrolysis temperature of the resin and lower than the pyrolysis temperatures of the carbon material having a graphene layered structure and the fine particles. Only the resin can be removed selectively easily by heating the resin-remaining partially exfoliated graphite at a temperature in such a range, and a still more excellent composite can be synthesized.

Additionally, an oxygen barrier effect of a graphene layered structure is further heightened by improving the adhesion of a carbon material having a graphene layered structure and fine particles. Therefore, as shown on DTA curves of fine particles and a composite in Figure 1, the peak of fine particles in a composite indicated by the arrow A2 can be shifted to a higher temperature than the peak of fine particles alone indicated by the arrow A1. That is, the pyrolysis temperature of fine particles in a composite can be further improved selectively. In this case, only a resin is enabled to be removed selectively still more easily, and still more excellent composite can be synthesized. The arrow B is intended to indicate the peak of a resin in a composite in Figure 1.

The confirmation of whether fine particles are inserted between layers of a carbon material having a graphene layered structure can be obtained in the following method, for example, by using an X-ray diffractometer.

First, measurement samples obtained by mixing a carbon material having a graphene layered structure, fine particles that are raw materials of a composite, and additionally the composite with Si at a certain amount, respectively are prepared. Each of the XRD spectra of the samples is measured. Next, in the obtained XRD spectrum the peak value derived from Si ($2\theta$ = 28.5 approximately) is standardized to 100. In each spectrum, the value of the peak showing a layered structure of graphite ($2\theta$ = 26.5 approximately) is compared with the Si peak value for confirmation. Specifically, if the value after composite formation is not significantly larger than the total of the peak values before composite formation, it turns out that the crystallinity is not increased, that is, the fine particles are effectively inserted between the layers, and stacking thereof is suppressed. More specifically, if the peak value after composite formation/the total of peak values before composite formation is 2 or less, it is recognized that the fine particles are inserted between the layers of the carbon material.

(Binder Resin)

A capacitor electrode material according to the present invention may further comprise a binder resin.

Polybutyral, polytetrafluoroethylene, styrene-butadiene rubber, a polyimide resin, an acrylic resin, a fluoropolymer such as polyvinylidene fluoride, water-soluble carboxymethyl cellulose or the like can be used as a binder resin. Preferably, polytetrafluoroethylene can be used. When polytetrafluoroethylene is used, the dispersibility and the heat resistance can be improved further.

The mixing ratio of a binder resin is kept preferably in the range of 0.3 to 40 parts by weight, and more preferably in the range of 0.3 to 15 parts by weight on the basis of 100 parts by weight of a composite. The capacitance of a capacitor can be increased further by keeping the mixing ratio of a binder resin in the above-mentioned range.

[Capacitor Electrodes]

A capacitor electrode material according to the present invention can be used as a capacitor electrode by including a binder resin and a solvent in the above-mentioned composite if needed and shaping the mixture.

The shaping of a capacitor electrode material can be performed, for example, by sheeting the capacitor electrode material with a rolling roller and thereafter drying the capacitor electrode material. The shaping of a capacitor electrode material can be performed also by coating a charge collector with a coating liquid comprising the above-mentioned composite, a binder resin and a solvent and thereafter drying the coated liquid. Ethanol, N-methyl pyrrolidone (NMP), water or the like can be used as the above-mentioned solvent.

[Capacitor]

A capacitor of the present invention comprises a capacitor electrode material composed according to the present invention. Therefore, the capacitance of a capacitor according to the present invention is increased. A capacitor electrode material of the present invention can be used for a capacitor by shaping the capacitor electrode material into the above-mentioned capacitor electrodes. A capacitor of the present invention is, for example, an electric double layer capacitor.

An aqueous electrolytic solution may be used as the electrolytic solution of a capacitor, or a nonaqueous (organic) electrolytic solution may be used as the electrolytic solution of a capacitor.

Examples of aqueous electrolytic solutions include an electrolytic solution in which water is used for a solvent, and sulfuric acid, potassium hydroxide or the like is used for an electrolyte.

Meanwhile, electrolytic solutions including for example the following solvents and electrolytes can be used as nonaqueous electrolytic solutions. Specific examples of solvents include propylene carbonate (PC), ethylene carbonate (EC), dimethyl carbonate (DMC), diethyl carbonate (DEC), acrylonitrile (AN) and the like. Electrolytes include lithium hexafluorophosphate (LiPF$_6$), lithium tetrafluoroborate (LiBF$_4$), tetraethylammonium tetrafluoroborate (TEABF$_4$), triethyl-methylammonium tetrafluoroborate (TEMABF$_4$) and the like.

Next, the present invention will be clarified by mentioning specific Examples and Comparative Examples of the present invention. The present invention is not limited to the following Examples.

(Example 1)

Preparation of Partially Exfoliated Graphite 1 (EEXG1) 20 g of expanded graphite (produced by Toyo Tanso Co., Ltd., trade name: "PF Powder 8", BET specific surface area = 22 m$^2$/g), 600 g of an aqueous 55% vinyl acetate copolymer emulsion liquid (produced by Showadenkosya. co. ltd., trade name "Polysol"), 1200 g of water as a solvent, and 0.6 g of carboxymethyl cellulose as a surfactant were mixed to provide a raw material composition. The raw material composition was irradiated with ultrasonic waves at 100 W and an oscillatory frequency of 28 kHz for 5 hours by using an ultrasonic treatment device (manufactured by HONDA ELECTRONICS Co., LTD.). Polyvinyl acetate was adsorbed to expanded graphite by ultrasonic treatment.

After the above-mentioned ultrasonic irradiation, the above-mentioned composition was vacuum dried at a drying temperature of 120°C for 4 hours.

Next, a heating step of maintaining a temperature of 450°C for 1 hour was performed. The above-mentioned polyvinyl acetate was pyrolyzed thereby to obtain partially exfoliated graphite 1 (EEXG1). A portion of polyvinyl acetate remains in this partially exfoliated graphite. The amount of the remaining resin was 65% by weight on the basis of 100% by weight of the resin-remaining partially exfoliated graphite. The specific surface area of the obtained partially exfoliated graphite measured by methylene blue adsorption method (MB value) was 750 m$^2$/g.

Manufacturing of Capacitor Electrodes

In 15 g of tetrahydrofuran (THF), 0.3 g of the partially exfoliated graphite 1 (EEXG1) obtained as described above was dispersed. To the obtained dispersion was added a dispersion separately obtained by dispersing 0.15 g of activated carbon as fine particles (the median size 2 μm, the specific surface area measured by methylene blue adsorption method (MB value): 1800 m$^2$/g) in THF. The partially exfoliated graphite (resin percentage 65 % by weight) and the activated carbon were mixed at a weight ratio of 2:1. A solvent was removed by filtering the obtained mixed liquid. Thereafter, the filtered material was vacuum dried. Then, only the resin was removed selectively by heating the obtained powder at 400°C for 3 hours to obtain a composite. Therefore, the resin was removed from the obtained composite, and the weight ratio between the partially exfoliated graphite, which is a carbon material, and the activated carbon, which is fine particles, was 1:1.

Next, the above-mentioned composite was dispersed in N-methyl pyrrolidone, 1 part by weight of polyvinylidene fluoride as a binder resin was added to 9 parts by weight of the composite, and the materials were mixed. A capacitor electrode was obtained by coating aluminium foil with the obtained coating liquid and drying the coated liquid. The thickness of the obtained coating film was 50 μm.

The specific surface area by methylene blue adsorption method and the median size were measured by the following methods.

Specific Surface Area by Methylene Blue Adsorption Method (MB Value)

Solutions of methylene blue in methanol at concentrations of 10 mg/L, 5.0 mg/L, 2.5 mg/L and 1.25 mg/L were prepared in volumetric flasks. Methylene blue which is a guaranteed reagent produced by KANTO CHEMICAL CO., INC. was used as methylene blue. The absorbance of the above-mentioned four provided methylene blue solutions were measured by using an ultraviolet and visible spectrophotometer manufactured by SHIMADZU CORPORATION (product number UV-1600), and a calibration curve was constructed.

Next, 0.005 g of methylene blue was placed in a 50 mL volumetric flask, methanol was added as a measuring solvent, and a 100 mg/L methylene blue solution was prepared. This methylene blue solution was diluted 10 times with the measuring solvent, and a 10 mg/L methylene blue solution was obtained.

A stirrer bar, a sample to be measured (0.001 g to be changed according to the BET value of a sample), and 50 mL of the above-mentioned 10 mg/L methylene blue solution were added in a 100 mL eggplant flask. Thereafter, the mixture was ultrasonicated for 15 minutes by using an ultrasonic washing machine. After the sample was thus dispersed, the mixture was stirred in a cooling bath at a temperature of 25°C for 60 minutes.

After reaching an adsorption equilibrium, the mixture was separated into the sample and a supernatant liquid by centrifugal separation. The absorbance of the 10 mg/L methylene blue solution, which was blank, and the absorbance of the above-mentioned supernatant liquid were measured by using the above-mentioned ultraviolet and visible spectrophotometer.

A difference between the absorbance of the above-mentioned blank methylene blue solution and the absorbance of the above-mentioned supernatant liquid, namely, a decrease in the absorbance was calculated. A decrease in the concentration of the methylene blue solution was determined by the decrease in the absorbance and the gradient of the calibration curve mentioned above. The amount of methylene blue adsorbed to the sample surface was determined from the decrease in the concentration of methylene blue solution by the following expression.

$$
\text{Adsorption amount of methylene blue } (\mu\text{mol/g}) =
$$
$$
[\{\text{decrease in concentration of methylene blue solution (g/L)}
$$
$$
\times \text{ volume of measuring solvent (L)}\} / \{\text{molecular weight of}
$$
$$
\text{methylene blue (g/mol)} \times \text{ charged mass of sample (g)}\}] \times 10^{6}
$$

The specific surface area was calculated from the determined methylene blue adsorption amount by the following method.

It was assumed that the specific surface area at the time when the above-mentioned measurement was performed by using KETJENBLACK (produced by Lion Specialty Chemicals Co., Ltd., trade name "EC300JD") and RPSA-2 (produced by the Association of Powder Process Industry and Engineering, JAPAN) as samples was equivalent to the specific surface area value in the BET measurement, and the relational expression between the specific surface area and the adsorption amount obtained by measurement was calculated as follows.

Specific surface area by the methylene blue method (the MB value, $m^2$/g) = adsorption amount by the above-mentioned measurement ($\mu$mol/g)/0.13

Median Size

First, ethanol was poured into a measuring cell in a particle size analyzer, blank measurement was performed, and additionally, a dispersion obtained beforehand by dispersing a measurement sample in ethanol at any concentration was added into the measuring cell so that the transmittance was set at an appropriate value in the particle size analyzer. It was confirmed that the concentration was in an appropriate range, and the particle size distribution was measured. The median size was determined by calculating the median of the distribution from the obtained spectrum.

It was confirmed whether fine particles were inserted between layers of a carbon material having a graphene layered structure according to the following procedure by using an X-ray diffractometer (manufactured by Rigaku Corporation, trade name "smart lab").

First, measurement samples obtained by mixing a carbon material having a graphene layered structure, fine particles that are raw materials of a composite, and additionally the composite with Si at a certain amount, respectively were prepared. Those XRD spectra were measured. Next, the peak values derived from Si ($2\theta$ = 28.5) were standardized as 100 in the obtained XRD spectra. The peak value after composite formation/the total peak value before composite formation (the total peak value of a carbon material and fine particles) was determined in the peaks indicating layered structures of graphite ($2\theta$ = 26.5) in respective spectra.

(Examples 2 to 11)

A capacitor electrode was obtained by preparation similarly to Example 1 except that the type of fine particles and the weight ratio between a carbon material having a graphene layered structure and fine particles (carbon material:fine particles) were set as listed in the following Table 1.

(Example 12)

A capacitor electrode was obtained by preparation similarly to Example 1 except that partially exfoliated graphite 2 (EEXG2) with the resin amount and the MB value different was produced by changing the firing time at the time of producing the partially exfoliated graphite from 1 hour to 2 hours in Example 1 and used.

(Example 13)

A capacitor electrode was obtained by preparation similarly to Example 1 except that flake graphite (produced by XG Sciences, Inc., trade name "xGnP C-1000") was used as a carbon material having a graphene layered structure.

(Example 14)

A carbon material having a graphene layered structure and fine particles were mixed without treatment for inserting the fine particles between graphene layers in Example 1, and thereafter a capacitor electrode was produced by preparation similarly to Example 1.

(Example 15)

Preparation of Partially Exfoliated Graphite 3

20 g of expanded graphite (produced by Toyo Tanso Co., Ltd., trade name "PF powder 8", BET specific surface area = 22 $m^2$/g), 400 g of polyethylene glycol 600 (produced by Wako Pure Chemical Industries, Ltd.), 500 g of water as a solvent, and 0.6 g of carboxymethyl cellulose as a surfactant were mixed, and a raw material composition was prepared. The raw material composition was irradiated with ultrasonic waves at 100 W and an oscillatory frequency of 28 kHz for 5 hours by using an ultrasonic treatment device (manufactured by HONDA ELECTRONICS Co., LTD.). Polyethylene glycol was adsorbed to expanded graphite by ultrasonic treatment.
After the above-mentioned ultrasonic irradiation, the above-mentioned composition was vacuum dried at a drying temperature of 120°C for 4 hours.
Next, a heating step of maintaining the temperature at 400°C for 1.5 hours was performed. The above-mentioned polyethylene glycol was pyrolyzed to obtain partially exfoliated graphite 3 (EEXG3) thereby. A portion of polyvinyl acetate remains in this partially exfoliated graphite. The amount of the remaining resin was 50% by weight on the basis of 100% by weight of the resin-remaining partially exfoliated graphite. The specific surface area of the obtained partially exfoliated graphite 3 (EEXG3) measured by methylene blue adsorption method (MB value) was 1200 $m^2$/g.
The carbon material obtained as described above was mixed with activated carbon, which is fine particles, by preparation similarly to Example 1. The mixing weight ratio was set as EEXG3 (carbon material):activated carbon = 1:1. As to a method for producing a capacitor electrode, a capacitor electrode was produced by preparation similarly to Example 1.

(Example 16)

A Capacitor electrode was produced by preparation similarly to Example 15 except that fine particles to use were changed to the same carbon black as those of Example 9 in Example 15.

(Comparative Example 1)

A carbon material obtained by heating EEXG1 at 400°C for 3 hours was dispersed in N-methyl pyrrolidone, 1 part by weight of polyvinylidene fluoride as a binder resin was added to 9 parts by weight of the carbon material, and the materials were mixed. A capacitor electrode was obtained by coating aluminum foil with the obtained coating liquid and drying the coated liquid.

(Comparative Example 2)

Activated carbon was used as a carbon material and dispersed in N-methyl pyrrolidone, 1 part by weight of polyvinylidene fluoride as a binder resin was added to 9 parts by weight of the carbon material, and the materials were mixed. A capacitor electrode was obtained by coating aluminum foil with the obtained coating liquid and drying the coated liquid.

(Comparative Example 3)

Carbon black was used as a carbon material and dispersed in N-methyl pyrrolidone, 1 part by weight of polyvinylidene fluoride as a binder resin was added to 9 parts by weight of the carbon material, and the materials were mixed. A capacitor electrode was obtained by coating aluminum foil with the obtained coating liquid and drying the coated liquid.

(Comparative Example 4)

A capacitor electrode was produced by preparation similarly to Example 1 except that partially exfoliated graphite 4 (EEXG4) which was obtained by changing the temperature condition at the time of producing partially exfoliated graphite in Example 1 from 450°C to 480°C and changing the firing time to 3 hours and had a different resin ratio and a different MB value was used, that activated carbon having a different MB value was used as fine particles, and additionally that the weight ratio between a carbon material and fine particles was changed.

Partially exfoliated graphites having a specific surface area, etc. different from those of Example 1 were used for the partially exfoliated graphites of Example 12 and Comparative Example 4, respectively, as shown in Table 1. A product with the trade name "SHIRASAGI P" produced by Osaka Gas Chemicals Co., Ltd. that was subject to pulverization was used for activated carbon for Examples 1 to 8, 12, 13 and 14 and Comparative Examples 2 and 4. A product with the trade name "KETJENBLACK EC600JD" produced by Lion Specialty Chemicals Co., Ltd. was used for the carbon black of Examples 9 and 16 and Comparative Example 3. A product with the trade name "YP50F" produced by KURARAY CHEMICAL CO., LTD. was used for activated carbon used for Example 15. Activated carbon produced by Wako Pure Chemical Industries, Ltd. was used for the activated carbon of Example 10. A product with the trade name "SG-BH8" produced by Ito Graphite Co., Ltd. was used for the graphite of Example 11.

(Evaluation of Capacitors by Using 1M Solution of TEABF$_4$ in PC for Electrolytic Solution)

The capacitor electrodes obtained in Examples 1 to 16 and Comparative Examples 1 to 4 were suction dried at 110°C for 11 hours. Thereafter, 2 circles having a diameter of 1 cm were cut out of each of the electrodes, and the weights thereof were measured. The weights of the 2 sheets were recorded at this time after the weight of aluminum foil was deducted, and the weight difference between the 2 sheets was maintained within less than 0.3 mg. Next, a cell was assembled by inserting a separator between the 2 sheets as a negative electrode and a positive electrode. Thereafter, an electric double layer capacitor was manufactured by pouring 2 mL of an electrolytic solution into the cell. These operations were performed under a condition of a dew point of -70°C or less.

The capacitance of the electric double layer capacitors was calculated from results of measurement of repeated charge and discharge characteristics between 0 V and 2 V (calculation range: 1.6 to 0.8 V, electric current value 40 mA/g) by using the following formula.

$$F = I / (\Delta V / \Delta t)$$

Additionally, the capacitance per weight was defined as a value obtained by the above-mentioned obtained capacitance divided by the total weight of a negative electrode and a positive electrode.

The capacitance per weight was determined according to the following criteria.

[Criteria of capacitance]

Excellent: The capacitance is 30 F/g or more.
Good: The capacitance is 25 F/g or more and less than 30 F/g.
Fair: The capacitance is 20 F/g or more and less than 25 F/g.
Poor: The capacitance is less than 20 F/g.

[Evaluation of Insertion of Fine Particles between Layers of Carbon Material]

Measurement samples obtained by mixing a carbon material having a graphene layered structure, fine particles that are raw materials of a composite, and additionally the composite obtained in each of the Examples with Si (produced by Sigma-Aldrich Co. LLC., trade name "Silicon", mean particle size: < 100 nm) at a certain amount, respectively were prepared. Each of the XRD spectra of the samples was measured by using an X-ray diffractometer (manufactured by Rigaku Corporation, trade name "smart lab"). Next, in the obtained XRD spectrum, the peak value derived from Si ($2\theta$ = 28.5 approximately) was standardized to 100. In each spectrum the value of the peak indicating the layered structure of graphite ($2\theta$ = 26.5 approximately) was compared with the Si peak value for confirmation. More specifically, if the value after composite formation (the peak value of the composite) is not significantly larger than the total of the peak values before composite formation (the total of the peak values of the carbon material and fine particles), it turns out that the crystallinity is not increased, that is, the fine particles are effectively inserted between the layers, and stacking of thereof is suppressed. When the peak value after composite formation/the total of the peak values before composite formation was 2 or less, it was estimated that the fine particles were inserted between the layers of the carbon material. It was considered that a certain amount of fine particles existed on the surface of the carbon material in view of the combination ratio.

Results are shown in the following Table 1.

[Table 1]

| | | Ex. 1 | Ex. 2 | Ex. 3 | Ex. 4 | Ex. 5 | Ex 6 | Ex. 7 | Ex. 8 | Ex. 9 | Ex. 10 |
|---|---|---|---|---|---|---|---|---|---|---|---|
| Carbon material having a graphene layered structure | Type | EEXG1 | EEXG1 | EEXG1 | EEXG1 | EEXG1 | EEXG1 | EEXG1 | EEXG1 | EEXG1 | EEXG1 |
| | Resin amount % by weight | 65 | 65 | 65 | 65 | 65 | 65 | 65 | 65 | 65 | 65 |
| | Median size $\mu$m | 20 | 20 | 20 | 20 | 20 | 20 | 20 | 20 | 20 | 20 |
| | MB value $m^2/g$ | 750 | 750 | 750 | 750 | 750 | 750 | 750 | 750 | 750 | 750 |
| Fine particles | Type | Activated carbon | Activated carbon | Activated carbon | Activated carbon | Activated carbon | Activated carbon | Activated carbon | Activated carbon | Carbon black | Activated carbon |
| | Median size $\mu$m | 2 | 9 | 0.04 | 20 | 2 | 2 | 2 | 2 | 0.03 | 8 |
| | MB value $m^2/g$ | 1800 | 1800 | 1800 | 1800 | 1800 | 1800 | 1800 | 1800 | 1600 | 800 |
| Composite | Carbon material: fineparticles (weightratio) | 1:1 | 1:1 | 1.1 | 1:1 | 3.7 | 9:1 | 1:4 | 20:1 | 1:1 | 1:1 |
| | MB value $m^2/g$ | 2000 | 2000 | 1900 | 1200 | 1400 | 1300 | 1200 | 1100 | 1800 | 1400 |
| Capacitance | | Excellent | Excellent | Excellent | Fair | Good | Good | Fair | Fair | Excellent | Good |
| XRD: value after composite formation/total value before composite formation | | 1.3 | 1.2 | 1.6 | 1.9 | 1.3 | 1.7 | 1.2 | 1.8 | 1.5 | 1.3 |

EP 3 382 728 A1

13

(continued)

| | | Ex. 11 | Ex. 12 | Ex. 13 | Ex. 14 | Ex. 15 | Ex. 16 | Comp.Ex. 1 | Comp.Ex. 2 | Comp.Ex. 3 | Comp. Ex.4 |
|---|---|---|---|---|---|---|---|---|---|---|---|
| Carbon material having a graphene layered structure or carbon material | Type | EEXG1 | EEXG2 | Flake graphite | EEXG1 | EEXG3 | EEXG3 | EEXG1 | Activated carbon | Carbon black | EEXG4 |
| | Resin amount: % by weight | 65 | 50 | 0 | 65 | 50 | 50 | 65 | 0 | 0 | 20 |
| | Median size $\mu$m | 20 | 20 | 10 | 20 | 10 | 10 | 20 | 2 | 0.03 | 20 |
| | MB value $m^2$/g | 750 | 500 | 900 | 750 | 1200 | 1200 | 750 | 1800 | 1600 | 600 |
| Fine particles | Type | Graphite | Activated carbon | Activated carbon | Activated carbon | Activated carbon | Carbon black | - | - | - | Activated carbon |
| | Median size $\mu$m | 9 | 2 | 2 | 2 | 2 | 0.03 | - | - | - | 2 |
| | MB value $m^2$/g | 50 | 1800 | 1800 | 1800 | 1400 | 1300 | - | - | - | 1500 |
| Composite | Carbon material :fine particles (weight ratio) | 7:3 | 1:1 | 1:1 | 1:1 | 1:1 | 1:1 | - | - | - | 73 |
| | MB value $m^2$/g | 1100 | 1400 | 1250 | 1100 | 2100 | 2100 | 85 | 1800 | 1600 | 600 |
| Capacitance F/g | | Fair | Good | Fair | Fair | Excellent | Excellent | Poor | Poor | Poor | Poor |
| XRD value after composite formation/total value before composite formation | | 1.2 | 1.4 | 1.7 | 1.9 | 1.5 | 1.5 | 3.4 | - | - | 2.2 |

**Claims**

1. A capacitor electrode material, comprising a composite of a carbon material having a graphene layered structure and fine particles, wherein a specific surface area of the composite measured by methylene blue adsorption method is 1100 m$^2$/g or more.

2. The capacitor electrode material according to claim 1, wherein the specific surface area of the composite measured by methylene blue adsorption method is 3500 m$^2$/g or less.

3. The capacitor electrode material according to claim 1 or 2, wherein the fine particles exist between graphene layers of the carbon material.

4. The capacitor electrode material according to any one of claims 1 to 3, wherein the carbon material is graphite or exfoliated graphite.

5. The capacitor electrode material according to any one of claims 1 to 4, wherein a specific surface area of the carbon material measured by methylene blue adsorption method is 300 m$^2$/g or more and 2500 m$^2$/g or less.

6. The capacitor electrode material according to any one of claims 1 to 5, wherein the specific surface area of the composite measured by methylene blue adsorption method is 1500 m$^2$/g or more.

7. The capacitor electrode material according to any one of claims 1 to 6, wherein the specific surface area of the composite measured by methylene blue adsorption method is 1800 m$^2$/g or more.

8. The capacitor electrode material according to any one of claims 1 to 7, wherein the carbon material is partially exfoliated graphite having a structure in which the graphite is partially exfoliated.

9. The capacitor electrode material according to any one of claims 1 to 8, wherein the fine particles are at least one selected from the group consisting of activated carbon, carbon black and graphene oxide.

10. The capacitor electrode material according to any one of claims 1 to 9, wherein a specific surface area of the fine particles measured by methylene blue adsorption method is 500 m$^2$/g or more and 4000 m$^2$/g or less.

11. The capacitor electrode material according to any one of claims 1 to 10, wherein a median size of the fine particles is 10 nm or more and less than 20 $\mu$m.

12. The capacitor electrode material according to any one of claims 1 to 11, wherein a weight ratio between the fine particles and the carbon material is 1/20 or more and 4 or less.

13. The capacitor electrode material according to any one of claims 1 to 12, further comprising a binder resin.

14. The capacitor electrode material according to claim 13, wherein the binder resin is a styrene butadiene rubber, a polybutyral, a polytetrafluoroethylene, an acrylic resin, a polyimide resin, or a fluoropolymer.

15. The capacitor electrode material according to claim 14, wherein the fluoropolymer is polyvinylidene fluoride.

16. The capacitor electrode material according to any one of claims 13 to 15, wherein a content of the binder resin is 0.3 parts by weight or more and 40 parts by weight or less on the basis of 100 parts by weight of the composite.

17. A capacitor, comprising the capacitor electrode material according to any one of claims 1 to 16.

[FIG. 1]

**INTERNATIONAL SEARCH REPORT**

| International application No. |
| --- |
| PCT/JP2016/084433 |

A. CLASSIFICATION OF SUBJECT MATTER
*H01G11/36*(2013.01)i, *H01G11/24*(2013.01)i, *H01G11/30*(2013.01)i

According to International Patent Classification (IPC) or to both national classification and IPC

B. FIELDS SEARCHED

Minimum documentation searched (classification system followed by classification symbols)
H01G11/36, H01G11/24, H01G11/30

Documentation searched other than minimum documentation to the extent that such documents are included in the fields searched
Jitsuyo Shinan Koho        1922-1996   Jitsuyo Shinan Toroku Koho   1996-2017
Kokai Jitsuyo Shinan Koho  1971-2017   Toroku Jitsuyo Shinan Koho   1994-2017

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | WO 2014/136609 A1  (Sekisui Chemical Co., Ltd.), 12 September 2014 (12.09.2014), claims; paragraphs [0029] to [0112] & JP 2014-197551 A      & US 2015/0270534 A1 claims; paragraphs [0053] to [0142] & EP 2966714 A1 | 1-17 |
| Y | WO 2015/178241 A1  (Nippon Zeon Co., Ltd.), 26 November 2015 (26.11.2015), paragraphs [0021] to [0027] (Family: none) | 1-17 |

☒ Further documents are listed in the continuation of Box C.   ☐ See patent family annex.

| | |
| --- | --- |
| *    Special categories of cited documents: <br> "A"  document defining the general state of the art which is not considered   to be of particular relevance <br> "E"  earlier application or patent but published on or after the international filing date <br> "L"  document which may throw doubts on priority claim(s) or which is cited to establish the publication date of another citation or other special reason (as specified) <br> "O"  document referring to an oral disclosure, use, exhibition or other means <br> "P"  document published prior to the international filing date but later than the priority date claimed | "T"  later document published after the international filing date or priority date and not in conflict with the application but cited to understand the principle or theory underlying the invention <br> "X"  document of particular relevance; the claimed invention cannot be considered novel or cannot be considered to involve an inventive step when the document is taken alone <br> "Y"  document of particular relevance; the claimed invention cannot be considered to involve an inventive step when the document is combined with one or more other such documents, such combination being obvious to a person skilled in the art <br> "&"  document member of the same patent family |

| Date of the actual completion of the international search | Date of mailing of the international search report |
| --- | --- |
| 18 January 2017 (18.01.17) | 31 January 2017 (31.01.17) |

| Name and mailing address of the ISA/ <br> Japan Patent Office <br> 3-4-3,Kasumigaseki,Chiyoda-ku, <br> Tokyo 100-8915,Japan | Authorized officer <br><br> Telephone No. |
| --- | --- |

Form PCT/ISA/210 (second sheet) (January 2015)

**INTERNATIONAL SEARCH REPORT**

International application No.

PCT/JP2016/084433

C (Continuation). DOCUMENTS CONSIDERED TO BE RELEVANT

| Category* | Citation of document, with indication, where appropriate, of the relevant passages | Relevant to claim No. |
|---|---|---|
| A | WO 2015/098758 A1 (Sekisui Chemical Co., Ltd.), 02 July 2015 (02.07.2015), paragraph [0047] & US 2016/0358718 A1 paragraph [0071] & JP 5969126 B2 & EP 3089184 A1 & CN 105493214 A & TW 201539500 A | 1-17 |
| A | WO 2014/034156 A1 (Sekisui Chemical Co., Ltd.), 06 March 2014 (06.03.2014), entire text & US 2015/0175778 A1 entire text & JP 5352028 B1 & EP 2889334 A1 & CN 104508051 A & TW 201408595 A | 1-17 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 201598758 A

- WO 201434156 A